# FASCICULE DE BREVET EUROPEEN

(11) **EP 2 906 050 B1**
(45) Date de publication et mention de la délivrance du brevet: **25.04.2018**
(21) Numéro de dépôt: 13786691.9
(22) Date de dépôt: 08.10.2013
(51) Int. Cl.: A23P 10/30

(54) **COMPOSITIONS ALIMENTAIRES COMPRENANT DES CAPSULES OBTENUES PAR COACERVATION NE METTANT PAS EN OEUVRE DE RETICULANT TOXIQUE**
DIÄTETISCHE ZUSAMMENSETZUNGEN MIT DURCH KOAZERVIERUNG GEWONNENEN KAPSELN OHNE VERWENDUNG VON TOXISCHEN VERNETZERN
DIETARY COMPOSITIONS COMPRISING CAPSULES OBTAINED BY COACERVATION WITHOUT THE USE OF TOXIC CROSS-LINKING AGENTS

(30) Priorité: 09.10.2012 FR 1259634
(43) Date de publication de la demande: 19.08.2015
(73) Titulaire: Societe D Exploitation De Produits Pour Les Industries Chimiques Seppic, 75007 Paris (FR)
(72) Inventeur: OLLAGNIER, Jean-Noël, F-81100 Castres (FR)
(74) Mandataire: Laigneau, Amandine
(86) Numéro de dépôt international: PCT/FR2013/052387
(87) Numéro de publication internationale: WO 2014/057204

(56) Documents cités:
- WO-A1-97/13416
- WO-A1-2004/041251
- WO-A1-2013/032631
- WO-A2-2007/026307
- US-A1- 2003 193 102

## Description

La présente invention concerne de nouvelles capsules à double parois obtenues par coacervation sans la mise en oeuvre d'agent réticulant et leur procédé d'obtention, ainsi que l'usage de ces capsules pour la préparation de compositions alimentaires.

Les capsules objets de l'invention peuvent avantageusement être utilisées dans le domaine de l'agroalimentaire, afin d'enrichir des produits alimentaires en ingrédients nutritionnels pour en faire des aliments fonctionnels, ou alicaments.

La coacervation décrit le phénomène de désolvatation de macromolécules, telles que des polymères, conduisant à une séparation de phases au sein d'une solution. La coacervation simple se rapporte aux procédés faisant intervenir la désolvatation d'un seul polymère par l'un des facteurs suivants : abaissement de température, addition d'un non-solvant, addition d'électrolytes, addition d'un deuxième polymère incompatible. Lorsque la désolvatation simultanée de deux polyélectrolytes hydrosolubles portant des charges opposées est provoquée par une modification de pH du milieu aqueux, on parle de coacervation complexe.

La coacervation complexe est une technique d'encapsulation bien connue et industrialisée depuis les années 50. Elle permet d'encapsuler des ingrédients insolubles dans l'eau. Le brevet US 2 800 457 du 23 juillet 1957 décrit par exemple le procédé d'encapsulation d'huiles dans un coacervat de deux polymères organiques : la gélatine et la gomme arabique. Le brevet canadien CA88263 du 5 octobre 1971 décrit un procédé similaire utilisant un polymère organique et un polymère minéral. Les documents WO 2013/032631 A1, WO 2004/041251 A1, WO 97/13416 A1 et WO 2007/026307 A2 décrivent également des procédés d'encapsulation par coacervation. Le procédé de fabrication de microcapsules par cette technique se déroule généralement en cinq étapes successives. Dans un premier temps, le produit à encapsuler (sous forme liquide ou solide, pur ou en solution huileuse) est dispersé dans une solution aqueuse contenant deux polymères de charges opposées (étape a). Dans un deuxième temps, la coacervation est induite par un ajustement du pH de la solution, de façon que les charges positives du premier polymère équilibrent les charges négatives du second (étape b). L'attraction électrostatique des deux polyélectrolytes provoque l'apparition d'un coacervat mixte. Dans un troisième temps, les gouttelettes de coacervat formées viennent s'adsorber (étape c) à la surface de la matière active à encapsuler et former un enrobage continu (étape d), Dans la quatrième étape, cet enrobage est consolidé par réticulation (étape e) des macromolécules constitutives du coacervat pour former des microcapsules stables. Finalement, les microcapsules sont séparées du milieu réactionnel par décantation et filtration, avant de subir des opérations de lavage ou de purification pour éliminer les produits n'ayant pas réagi, en particulier l'excès d'agents de réticulation, et éventuellement des opérations de séchage.

Parmi les macromolécules ou polymères organiques à caractère cationique utilisables dans la technologie de coacervation, on peut citer de manière non limitative les protéines animales comme la gélatine de porc ou de poisson, l'albumine, les protéines végétales issues par exemple du soja, de la pomme de terre ou du blé, le chitosan et ses dérivés, les polymères synthétiques issus de la combinaison d'amino acides comme la polylysine ou encore les polymères d'origine végétale comme la gomme guar et ses dérivés.

Parmi les polymères organiques anioniques pouvant être mis en oeuvre se trouvent les polymères naturels comme la gomme arabique, les alginates, les carraghénates, les dérivés de la cellulose comme la carboxyméthyle cellulose, les dérivés d'amidon comme le carboxyméthyle amidon, ou les polymères synthétiques comme les polymères acryliques, méthacryliques, polylactiques, polyglycoliques ou leurs combinaisons.

Les ingrédients encapsulés peuvent être des principes actifs cosmétiques, pharmaceutiques ou nutritionnels comme des filtres solaires, des huiles essentielles, les vitamines A, D, E ou leurs dérivés, des lipoaminoacides.

Pour obtenir des capsules suffisamment résistantes mécaniquement, la réticulation de l'étape (e) est indispensable. Cette opération met en jeu un agent réticulant. Parmi les agents réticulants les plus efficaces, on peut citer le formaldéhyde ou le glutaraldéhyde. D'autres réticulants ont également été proposés, comme les carbodiimides, les isocyanates (HDI ou Hexaméthylène diisocyanate, TDI ou Toluène Di Isocyanate, IPDI ou Isopropyl Di Isocyanate), les proanthocyanidines... Tous ces réticulants ont soit une toxicité non négligeable ou sont instables en milieu aqueux et doivent être utilisés dans des conditions qui compliquent l'étape de réticulation. D'autres auteurs ont décrit des procédés de réticulation avec des enzymes telles que les transglutaminases ou la génépine. Les coûts de ces produits sont tels que seules quelques applications à très fortes valeurs ajoutées peuvent être envisagées.

Un agent réticulant est un composé chimique qui permet de relier une chaîne polymérique à une autre par la formation de liaisons covalentes. Dans l'état de la technique, il s'agit notamment d'une réaction entre les fonctions aldéhydes du réticulant et les fonctions amines résiduelles des protéines, en particulier avec les fonctions amines des motifs lysine pour former des liaisons covalentes -N=CH-.

Le glutaraldéhyde est l'agent réticulant le plus souvent mis en oeuvre. Il est efficace et peu onéreux. Mais il doit être utilisé à des doses élevées, voisines de 1 à 5 moles/kg de gélatine (soit 100 à 500g/kg de protéine) et présente une toxicité non négligeable tant pour le manipulateur que pour l'utilisateur. L'élimination du glutaraldéhyde en excès est indispensable, notamment pour toutes les applications pharmaceutiques, alimentaires ou cosmétiques ; elle nécessite de nombreux lavages successifs qui sont consommateurs d'eau et de temps pour obtenir des microcapsules contenant un taux résiduel de glutaraldéhyde acceptable, inférieur à une centaine de ppm.

Un premier problème à résoudre pour les inventeurs de la présente invention est donc de produire des microcapsules suffisamment résistantes par une technique de coacervation complexe qui n'utilise pas d'agent de réticulation.

Compte-tenu du principe même du procédé de coacervation, seuls des actifs lipophiles, insolubles dans l'eau peuvent être incorporés dans les microcapsules obtenues par cette technologie. Cela constitue indubitablement une limitation du procédé alors que de très nombreux ingrédients hydrosolubles doivent être également incorporés dans des microcapsules.

Un objet de l'invention est donc de développer une technique de coacervation améliorée, sans mise en oeuvre de réticulants toxiques ou onéreux, et permettant d'encapsuler à la fois des ingrédients solubles et insolubles dans l'eau.

Pour encapsuler des ingrédients hydrosolubles, d'autres techniques ont été décrites telles que, par exemple, la granulation au moyen de polymères hydrophiles, l'émulsification dans des huiles sous forme d'émulsions de type eau dans huile, l'absorption sur des résines échangeuses d'ions pour former des résinâtes. Une des technologies les plus utilisées pour encapsuler des ingrédients hydrosolubles reste l'incorporation dans des microbilles de polymères hydrosolubles comme les chitosans, les alcools polyvinyliques ou les alginates. Ces derniers sont mis en oeuvre dans de nombreuses applications pharmaceutiques ou alimentaires pour obtenir des microbilles par un procédé de coacervation simple, aussi appelé dripping. A titre d'exemple, on trouvera la description d'un tel procédé d'encapsulation de cellules dans la demande de brevet WO9109119 du 27 juin 1991.

Le dripping consiste à préparer une solution aqueuse contenant l'ingrédient hydrosoluble à encapsuler et un polymère tel que l'alginate de sodium. Cette solution est mise sous pression à travers des buses calibrées pour former des gouttes recueillies dans une solution aqueuse de sels divalents comme le chlorure de calcium, de magnésium ou de manganèse. Les ions calcium réagissent avec l'alginate de sodium pour former immédiatement des billes solides, insolubles, d'alginate de calcium. Les billes obtenues sont séparées par filtration ou tamisage puis généralement lavées à l'eau pour éliminer le chlorure de calcium en excès.

Dans ce contexte, les inventeurs de la présente invention ont mis au point de nouvelles capsules à double parois pouvant contenir un actif lipophile dans les capsules primaires et éventuellement un actif hydrophile inclus dans la seconde avec un procédé de coacervation sans réticulation chimique.

Ces microcapsules originales sont constituées d'un coeur lipophile entouré d'une première couche de coacervat polymérique et d'une seconde couche comprenant un hydrogel. Elles possèdent de bonnes performances de contrainte à la rupture et se distinguent plus particulièrement par leur non toxicité puisque aucun agent de réticulation toxique n'est utilisé. Elles sont aussi modulables puisqu'on peut envisager d'encapsuler à la fois un actif lipophile dans le coeur et un actif hydrophile dans une matrice hydrogel. Elles peuvent être présentées soit sous forme humide soit sous forme sèche avec un prix de revient raisonnable.

Ainsi, l'invention a pour objet un procédé de préparation de capsules à double parois comprenant les étapes suivantes :
étape a) dispersion d'un principe actif lipophile dans une solution aqueuse, ladite solution contenant au moins un polymère anionique et au moins un polymère cationique ;
étape b) ajustement du pH de la solution obtenue à l'étape a) pour que les charges positives du polymère cationique équilibrent les charges négatives du polymère anionique afin d'induire une coacervation ;
étape c) adsorption des gouttelettes de coacervat issues de l'étape b) à la surface du principe actif pour former des capsules;
étape d) introduction d'une solution de polymères anioniques dans le milieu réactionnel contenant les capsules obtenues à l'étape c) ;
étape e) introduction du mélange issu de l'étape d) dans un moyen pour former des gouttes ;
étape f) mélange des gouttes issues de l'étape e) avec une solution de sels divalents et formation des capsules à double parois ;
caractérisé en ce qu'aucun agent réticulant n'est utilisé et que le principe actif nutritionnel est choisi parmi les lipides bioactifs, les sels d'oligo-éléments, les vitamines liposolubles, les pré-biotiques, les pro-biotiques, les protéines et/ou les concentrats de protéines laitières, les enzymes végétales ou animales, les acides aminés et peptides, les sucres, les exhausteurs de goût.
Selon d'autres aspects particuliers, l'invention a pour objet :
- Un procédé tel que décrit ci-dessus, caractérisé en ce que le polymère anionique est choisi parmi les polymères naturels comme la gomme arabique, les alginates, les carraghénates, les dérivés de la cellulose comme la carboxyméthyle cellulose, les dérivés d'amidon comme le carboxyméthyle amidon, ou les polymères synthétiques comme les polymères acryliques, méthacryliques, polylactiques, polyglycoliques ou leurs combinaisons.
- Un procédé tel que décrit ci-dessus, caractérisé en ce que le polymère cationique est choisi parmi les protéines animales comme la gélatine de porc ou de poisson, l'albumine, les protéines végétales issues par exemple du soja, de la pomme de terre ou du blé, le chitosan et ses dérivés, les polymères synthétiques issus de la combinaison d'amino acides comme la polylysine ou encore les polymères d'origine végétale comme la gomme guar et ses dérivés.
- Un procédé tel que décrit ci-dessus, caractérisé en ce que la solution de polymères anioniques de l'étape d) est une solution d'alginate de sodium.
- Un procédé tel que décrit ci-dessus, caractérisé en ce que ledit moyen pour former les gouttes mis en oeuvre à l'étape e) est une buse ou une aiguille.
- Un procédé tel que décrit ci-dessus, caractérisé en ce que la solution de sels divalents de l'étape f) est choisie parmi les solutions de chlorure de calcium, de chlorure de baryum, de chlorure de manganèse.
- Un procédé tel que décrit ci-dessus, caractérisé en ce que la solution de polymères anioniques de l'étape d) contient un principe actif à encapsuler, hydrophile ; et optionnellement au moins un additif choisi parmi des solides insolubles finement divisés de nature minérale, comme par exemple des silices, des laponites, des alumino-silicates, du dioxyde de titane, du sulfate de calcium ou de nature organique comme des cires micronisées telles que la cire de carnauba ou la cire d'abeille, des polymères cationiques comme le chitosan ou la polylysine, de l'acide stéarique ou ses dérivés micronisés, de la cellulose microcristalline, des amidons.
- Un procédé tel que décrit ci-dessus comprenant l'étape g) de filtration des capsules obtenues à l'étape f) ; optionnellement une étape h) de lavage à l'eau ; et optionnellement une étape de séchage.

Les capsules peuvent enfin être séchées par tout procédé de séchage connu de l'homme de l'art, comme par exemple dans une étuve, un lyophilisateur ou un lit fluidisé. Elles peuvent également être remises en suspension dans une solution adéquate pour être stockées, transportées et utilisées sous forme liquide.

L'invention concerne également une capsule à double parois comprenant un coeur lipophile entouré d'une première couche de coacervat polymérique et d'une seconde couche comprenant un hydrogel caractérisée en ce qu'elle ne contient aucune trace d'agent réticulant.
Selon d'autres aspects particuliers, l'invention a pour objet :
- Une capsule telle que décrite ci-dessus caractérisée en ce que le coeur lipophile comprend un principe actif choisi parmi les lipides bioactifs, les sels d'oligo-éléments, les vitamines liposolubles, les pré-biotiques, les pro-biotiques, les protéines et/ou les concentrats de protéines laitières, les enzymes végétales ou animales, les acides aminés et peptides, les sucres, les exhausteurs de goût.
- Une capsule telle que décrite ci-dessus, caractérisée en ce que l'hydrogel comprend un principe actif hydrophile nutritionnel.
- Une capsule telle que décrite ci-dessus, ayant un diamètre compris entre 100 µm et 3000 µm et de préférence entre 500 µm et 2000 µm.
- Une capsule telle que décrite ci-dessus, susceptible d'être obtenue par le procédé tel que défini ci-dessus.
- Une capsule telle que décrite ci-dessus caractérisée en ce qu'elle comprend de 0,5% à 40 % en poids d'actif lipophile, plus particulièrement de 1% à 30%, et encore plus particulièrement de 1% à 20%, de 0% à 20% en poids d'actif hydrophile, plus particulièrement de 0,5% à 10% et encore plus particulièrement de 0,5% à 5%, de 0,1% à 5% en poids de polymère anionique, plus particulièrement de 0,5 % à 5%, et encore plus particulièrement de 1% à 3%.

L'invention a enfin pour objet l'utilisation d'au moins une capsule telle que définie ci-dessus pour la préparation d'une composition agroalimentaire. Une composition agroalimentaire comprenant de 0,01% à 20% massique, plus particulièrement de 1% à 10% massique d'au moins une capsule selon l'invention, est également un objet de la présente invention.
- Les ingrédients encapsulés sont des principes actifs pour la nutrition :
   1) les lipides bioactifs :
      - les phytostérols, comme par exemple ceux extraits des huiles végétales, et plus particulièrement extraits de l'huile d'argousier, de l'huile de maïs, de l'huile de soja ;
      - les complexes de phytostérols, isolés des huiles végétales, comme par exemple la cholestatine, composée de campestérol, de stigmastérol et de brassicastérol ; les phytostanols ;
      - les caroténoïdes, qui appartiennent à la famille des terpénoïdes, extraits des algues, des plantes vertes, des champignons, des bactéries ;
      - les acides gras polyinsaturés du groupe oméga-3, comme par exemple l'acide alpha-linolénique, l'acide eicosapentaénoïque, l'acide docosahexanoïque ;
      - les acides gras polyinsaturés du groupe oméga-6, comme par exemple l'acide linoléique, l'acide γ-linolénique, l'acide eicosadiénoïque, l'acide dihomo-γ-linolénique, l'acide arachidonique, l'acide docosadiénoïque, l'acide docosatétraénoïque, l'acide docosapentaénoïque.
   2) Les sels d'oligo-éléments hydrosolubles ou hydrodispersibles :
      - le carbonate ferreux, le chlorure ferreux tétrahydraté, le chlorure ferrique hexahydraté, le citrate ferreux hexahydraté, le fumarate ferreux, le lactate ferreux tétrahydraté, le sulfate ferreux monohydraté, le sulfate ferreux heptahydraté, le chélate ferreux d'acides aminés hydratés, le chélate de fer de glycine ;
      - l'iodate de calcium hexahydraté, l'iodate de calcium anhydre ;
      - l'iodure de sodium, l'iodure de potassium ;
      - l'acétate de cobalt tétrahydraté, le carbonate basique de cobalt monohydraté, le carbonate de cobalt hexahydraté, le sulfate de cobalt heptahydraté, le sulfate de cobalt monohydraté, le nitrate de cobalt hexahydraté ;
      - l'acétate cuivrique monohydraté, le carbonate basique de cuivre monohydraté, le chlorure cuivrique dihydraté, le méthionate de cuivre, le sulfate cuivrique pentahydraté, le chélate cuivreux d'acides aminés hydratés, le chélate cuivreux de glycine hydraté, le chélate de cuivre de Phydroxy-analogue de méthionine ;
      - le carbonate manganeux, le chlorure manganeux tétrahydraté, le phosphate acide de manganèse trihydraté, le sulfate manganeux tétrahydraté, le sulfate manganeux monohydraté, le chélate de manganèse d'acides amines hydraté, le chélate de manganèse de glycine hydraté, le chélate de manganèse de l'hydroxy-analogue de méthionine ;
      - le lactate de zinc trihydraté, l'acétate de zinc dihydraté, le carbonate de zinc, le chlorure de zinc monohydraté, le sulfate de zinc heptahydraté, le sulfate de zinc monohydraté, le chélate de zinc d'acides aminés hydratés, le chélate de zinc de glycine hydraté, le chélate de zinc de l'hydroxy-analogue de méthionine ;
      - le molybdate d'ammonium, le molybdate de sodium, le sélénite de sodium, le sélénate de sodium ;
      - la forme organique du sélénium produite par saccharomyces cerevisiae, la sélénomethionine (levure séléniée inactivée), et la séléno méthionine produite par Saccharomyces cerevisiae (levure séléniée inactivée).
   3) Les vitamines hydrosolubles ou liposolubles :
      - La vitamine A,
      - la vitamine D2 (ergocalciférol), le 25-hydrox calciférol,
      - la vitamine D3 (cholécalciférol),
      - le beta-carotène (pro-vitamine A),
      - la vitamine E,
      - la vitamine K,
      - la vitamine B1, par exemple sous la forme du chlorhydrate de thiamine et/ou mononitrate de thiamine,
      - la vitamine B2, par exemple sous la forme de riboflavine et/ou phosphate de riboflavine sel monosodique ester,
      - la vitamine B6, par exemple sous la forme de chlorhydrate de pyridoxine,
      - la vitamine B12 sous la forme de cyanocobalamine,
      - la vitamine C sous la forme d'acide L-ascorbique, de L-ascorbate de sodium, de L-ascorbate de calcium, d'acide palmityl-6-L-ascorbique sels de calcium, de sodium ascorbylmonophosphate,
      - l'acide pantothénique par exemple sous la forme de calcium D-pantothenate, ou D-pantothenol,
      - la vitamine PP, par exemple sous forme d'acide nicotinique, niacine, et/ou nicotinamide-niacinamide,
      - la vitamine B9, par exemple sous forme d'acide folique,
      - la vitamine H2, B7 ou BW, sous forme de biotine,
      - la choline, par exemple sous forme de chlorure de choline, de choline dihydrogène citrate, de bitartrate de choline,
      - l'inositol,
      - la carnitine, par exemple sous forme de L-carnitine, L-carnitine-L-tartrate,
      - la taurine.
   4) Les pré-biotiques : à savoir des oligosaccharides ou des polysaccharides qui jouent le rôle de substrat pour favoriser la croissance de certaines bactéries du colon (lactobacilles et bifidobactéries).
      On peut citer :
      - l'inuline
      - les trans-galactooligosaccharides
      - les fructanes
      - les manno-oligosaccharides
   5) Les pro-biotiques : à savoir des micro-organismes vivants, des bactéries ou des levures qui stimulent la croissance de bactéries utiles pour générer un effet bénéfique à la santé, en contribuant notamment à la digestion des fibres, en renforçant le système immunitaire, en agissant contre la diarrhée, l'eczéma atopique, l'ulcère stomacal.
      On peut citer différentes souches de *Saccharomyces cerevisiae,* de *Bacillus cereus var toyoi,* de *Bacillus subtilis* seul ou en combinaison avec le *Bacillus licheniformis,* ou encore des souches *d'Enteroccocus faecium.* Ces souches de microorganismes sont généralement associées à un support solide, par exemple le carbonate de calcium, le dextrose ou le sorbitol.
   6) Les protéines et/ou les concentrats de protéines laitières, issus du cracking du lait, tels que le colostrum sous forme de poudre lyophilisée ou atomisée, le lactoserum sous forme de poudre, de fractions purifiées ou enrichies en IgG, en lactoferrine, en lactoperoxydase.
   7) Les enzymes végétales ou animales, comme par exemple, la promutase (SOD), la 3-phytase, la 6- phytase, les endo-l,4-betaglucanases, les endo-l,4-betaxylanases, ou encore d'autres enzymes améliorant ou favorisant la digestion.
   8) Les acides aminés et peptides, comme par exemple la L-carnitine, plus particulièrement sous sa forme dipeptidique.
   9) Les sucres, comme par exemple les polysaccharides solubles dans l'eau, et les sucres de poids moléculaire inferieur, tels que les oligosaccharides, mono- ou disaccharides, comme par exemple le glucose, le lactose, le dextrose.
   10) Les exhausteurs de goût, par exemple le glutamate de sodium, ou encore des édulcorants intenses tels que les extraits de Stevia, les Rébiaudosides.

Ils peuvent être estérifiés, c'est-à-dire combinés à un gras : ce procédé permet de bien les intégrer à des aliments gras, comme des margarines ou des sauces à salade, par exemple. On trouve aussi sur le marché d'autres produits enrichis en phytostérols : yogourt, jus d'orange, barres-collations, barres chocolatées, fromage, gruau instantané, boissons de soya, etc.

De manière surprenante, les microcapsules non réticulées obtenues à l'étape (d) sont stables en présence de la solution de polymères anioniques ajoutée et ne se brisent pas lorsqu'on réalise les étapes (e) et (f) du procédé selon l'invention. L'ingrédient lipophile reste confiné dans le coeur huileux de la nouvelle microcapsule et l'ingrédient hydrophile est encapsulé dans la seconde coquille d'alginate.

La solution de polymère anionique mise en oeuvre à l'étape (e) peut contenir aussi des additifs technologiques destinés à renforcer la résistance mécanique des microbilles, à ajuster leur densité ou à moduler la cinétique de libération de l'ingrédient hydrophile. Ces additifs peuvent être des solides insolubles finement divisés de nature minérale, comme par exemple des silices, des laponites, des alumino - silicates, du dioxyde de titane, du sulfate de calcium ou de nature organique comme des cires micronisées (cire de carnauba, cires d'abeille...), des polymères cationiques comme le chitosan ou la polylysine, de l'acide stéarique ou ses dérivés micronisés, de la cellulose microcristalline, des amidons. Les additifs technologiques peuvent aussi être des produits solubles comme des sels minéraux, des glycols ou des tensioactifs permettant une meilleure dispersion des microcapsules ou facilitant les opérations de séchage.

Les capsules objet de l'invention comprenant des ingrédients actifs nutritionnels hydrophiles ou lipophiles peuvent être incorporées :
- dans des compléments alimentaires de toute forme galénique (comme par exemple les comprimés, les gélules, les capsules molles, les sirops, les poudres, les boissons) ou,
- dans tout produit alimentaire, comme par exemple une boisson (eau, jus de fruits, boisson aromatisée, boisson énergétique, boisson alcoolisée, café, thé), un produit laitier (lait, yaourt, dessert lacté, yaourt à boire, fromages, crèmes glacées), des barres chocolatées, un produit céréalier (comme par exemple des barres de céréales, des biscuits, des céréales pour petits déjeuners, des farines, des produits de panification), un produit de nutrition spécialisée (nutrition infantile, nutrition pour sportifs, nutrition clinique, substituts de repas), des confiseries (chewing gums, autres confiseries), des préparations de fruits et/ou de légumes.

Les exemples suivants décrivent une mise en oeuvre du procédé selon l'invention et les microcapsules obtenues.

### EXEMPLE N°1

**Protocole de double encapsulation par coacervation avec protéine de pomme de terre et gomme arabique puis insertion dans des billes d'alginate/Laponite.**

| **Matériel nécessaire** | **Produits nécessaires** |
|---|---|
| Réacteur en verre (2L) | 10g d'isolat de pomme de terre |
| Pale d'agitation | 15g de Gomme arabique |
| Bain chauffant | 625g d'eau déminéralisée |
| Béchers | 100g d'huile TCM (Triglycéride C8-C10) |
| Sonde à pH | 0,1g de colorant Red Oil |
| Agitateur magnétique | Acide acétique 10% |
| Filtre 100µm | 4g d'alginate en poudre |
| Seringue | 1g de Laponite |
| | Solution [CaCl₂]=4% |

### 1.1 Préparation de microcapsules par coacervation

### • Phase huile

0,1g de red oil et 100g d'huile TCM sont introduits dans un bécher et agités avec un agitateur magnétique pendant 20 minutes à 40°C. Filtrer et laisser refroidir.

### • Phase aqueuse

15g de gomme arabique, sont introduits dans un bécher contenant 400g d'eau. Agiter avec un agitateur magnétique jusqu'à dissolution (5 minutes) puis introduire le mélange dans le réacteur et agiter à 200 tours par minute (tpm).

### • Incorporation de la phase huile

Augmenter l'agitation à 350 tpm du réacteur puis introduire lentement l'huile. Laisser agiter pendant 15 minutes.

### • Isolat de pomme de terre

10g d'isolat de pomme de terre et 225g d'eau sont introduits dans un bécher et agités avec un agitateur magnétique. Lorsque la dissolution est complète (5 minutes), introduire très lentement la solution dans le réacteur en contrôlant le pH (environ 4 après tout l'ajout).

### • Abaissement du pH

Diminuer le pH du milieu à 3,65 avec de l'acide acétique à 10%. Pour que la coacervation se forme.

### • Augmentation de la température

Augmenter la température à 50°C pendant 1 heure pour durcir l'isolat de pomme de terre. Puis laisser refroidir et décanter.

### 1.2 Préparation de microbilles par double encapsulation

### • Préparation de la solution d'alginate

4g d'alginate et 1g de Laponite sont introduits lentement dans un bécher contenant 200g d'eau sous agitation vigoureuse pendant 30 minutes.

### • Mélange microcapsules/alginate

Peser 100g de microcapsules obtenues à l'étape 1.1 et les introduire dans 150g d'une solution à 2% d'alginate de sodium.

### • Formation des microbilles

Introduire le mélange dans une seringue et faire des gouttes dans la solution de chlorure de calcium. Laisser un temps de contact de 15 minutes. Pour finir, les rincer à l'eau.

### 1.3. Caractérisation des microbilles obtenues par le procédé.

Les billes non séchées obtenues par le procédé sont des sphères colorées ayant une taille moyenne de 1000 µm.

Elles contiennent environ 20% d'un coeur huileux, 5% d'un coacervat de gélatine/ gomme arabique, 1% d'alginate, 0,5% de laponite, le reste étant de l'eau.

Lorsqu'on exerce une pression mécanique sur les microbilles, elles éclatent en relargant de l'huile rouge.

### EXEMPLE N°2

### Protocole de double encapsulation par coacervation avec de la gélatine et gomme arabique puis insertion dans des billes d'alginate

### 2.1 Préparation des microcapsules par coacervation

| **Matériel nécessaire** | **Produits nécessaires** |
|---|---|
| Réacteur en verre (2L) | 12,5g de Gélatine |
| Pâle d'agitation | 12,5g de Gomme arabique |
| Bain chauffant | 550g d'eau déminéralisée |
| Bain de glace | 100g d'huile TCM |
| Béchers | 0,1g de colorant Red Oil |
| Sonde à pH | Acide acétique 10% |
| Thermomètre | 4g d'alginate en poudre |
| Agitateur magnétique | 1g de Laponite |
| Filtre 100µm | Solution [CaCl₂]=4% |
| Seringue | |

### • Phase huile

0,1g de red oil (utilisé comme ingrédient lipophile modèle à encapsuler) et 100g d'huile TCM sont introduits dans un bécher et agités avec un agitateur magnétique pendant 20 minutes à 40°C. Filtrer et laisser à 40°C.

### • Phase aqueuse

300g d'eau sont introduits dans le réacteur thermostaté à 40°C.
12,5g de gomme arabique, 12,5g de gélatine sont introduits dans un bécher contenant 250g d'eau. Agiter à 40°C jusqu'à dissolution (15minutes). Puis ajouter le mélange dans le réacteur et agiter à 200 tpm.

### • Incorporation de la phase huile

Augmenter l'agitation à 350 tpm puis introduire lentement l'huile chaude. Laisser agiter pendant 15 minutes.
Abaissement du pH
Stopper la chauffe et diminuer le pH du milieu à 4,10 avec de l'acide acétique à 10%. Pour que la coacervation se forme.

### • Abaissement de la température

Diminuer la température à 10°C pour durcir la gélatine. Laisser 15 minutes puis stopper l'agitation. Puis laisser décanter.

### 2.2. Préparation de microbilles par double encapsulation

### • Préparation de la solution d'alginate

4g d'alginate et 1g de Laponite sont introduits lentement dans un bécher contenant 200g d'eau sous agitation vigoureuse pendant 30 minutes.

### • Mélange microcapsules/alginate (50/50)

Peser 100g de microcapsules et les introduire dans la même quantité de la solution d'alginate de sodium. Homogénéiser sous agitation magnétique. Introduire le mélange dans une seringue et faire des gouttes dans la solution de chlorure de calcium. Laisser un temps de contact de 15 minutes, puis les rincer à l'eau.

### 2.3. Caractérisation des microbilles obtenues par le procédé.

Les microbilles obtenues sont translucides, de taille moyenne environ 800µm. Les microcapsules primaires d'huile et de gélatine sont clairement visibles à l'intérieur des microbilles.

Les microbilles contiennent environ 20% d'un coeur huileux, 5% d'un coacervat de gélatine / gomme arabique, 1% d'alginate, 0,5% de laponite, le reste étant de l'eau.

Il a été vérifié que les microbilles selon l'invention sont stables et étanches. Pour cela, elles ont été dispersées dans une huile minérale et soumises à agitation magnétique pendant deux heures. La coloration de l'huile minérale a été observée au bout de deux heures. Toute coloration de cette huile traduit une diffusion du colorant ou une rupture des microcapsules. A titre de témoin, des microcapsules réalisées par le procédé de coacervation sans réticulation obtenues selon le procédé décrit au paragraphe 2.1 et des microbilles obtenues par le même procédé mais réticulées avec du glutaraldéhyde ont été soumises au même test.

| | Microcapsules non réticulées | Microcapsules réticulées au glutaraldéhyde | Microbilles selon l'invention |
|---|---|---|---|
| Coloration de l'huile après 2 h | Rouge vif | Aucune coloration | Aucune coloration |

Ces résultats démontrent la bonne stabilité des microbilles selon l'invention.

### EXEMPLE N°3

### Protocole de double encapsulation des microcapsules (par coacervation avec de la gélatine) dans des billes d'alginate.

### 3.1 Préparation des microcapsules par coacervation

| **Matériel nécessaire** | **Produits nécessaires** |
|---|---|
| Réacteur en verre (2L) | 12,5g de Gélatine |
| Pâle d'agitation | 12,5g de Gomme arabique |
| Bain chauffant | 550g d'eau déminéralisée |
| Bain de glace | 100g d'huile TCM |
| Béchers | 0,1g de colorant Red Oil |
| Sonde à pH | Acide acétique 10% |
| Thermomètre | 4g d'alginate en poudre |
| Agitateur magnétique | 1g de caféine |
| Filtre 100µm | Solution [CaCl₂]=4% |
| Générateur de gouttes NISCO VAR D | |

Le même protocole que celui décrit à l'exemple 2 est mis en oeuvre.

### 3.2 Préparation de microbilles par double encapsulation

### • Préparation de la solution d'alginate et de caféine

4g d'alginate et 1g de caféine sont introduits lentement dans un bécher contenant 200g d'eau sous agitation vigoureuse pendant 30 minutes.

### • Mélange microcapsules/alginates (50/50)

Peser 100g de microbilles obtenues à l'étape 3.1, et y introduire la même quantité d'alginate à 2%. Mélanger pour obtenir une suspension homogène.

Introduire le mélange dans le réservoir du générateur de gouttes NISCO VAR D équipé d'une buse de diamètre 800µm et mettre en marche l'appareil avec les paramètres suivants :
Débit: 12ml/min, fréquence des vibrations de la buse vibrante: 0,22khz, amplitude 79%.

Les gouttes générées sont récoltées dans la solution de chlorure de calcium où elles forment des microbilles solides. Laisser un temps de contact de 15 minutes, filtrer les billes et les rincer à l'eau.

### 3.3. Caractérisation des microbilles obtenues par le procédé

On obtient des microbilles de diamètre moyen 1500µm, contenant deux ingrédients encapsulés : la caféine dans la matrice externe d'alginate et le Red oil dans le coeur huileux. Leur composition quantitative est d'environ 20% d'huile, 5% d'un coacervat de gélatine / gomme arabique, 1% d'alginate, 0,5% de caféine, le reste étant de l'eau.

## Revendications

1. Procédé de préparation de capsules à double parois comprenant les étapes suivantes :
étape a) dispersion d'un principe actif lipophile dans une solution aqueuse, ladite solution contenant au moins un polymère anionique et au moins un polymère cationique ;
étape b) ajustement du pH de la solution obtenue à l'étape a) pour que les charges positives du polymère cationique équilibrent les charges négatives du polymère anionique afin d'induire une coacervation ;
étape c) adsorption des gouttelettes de coacervat issues de l'étape b) à la surface du principe actif pour former des capsules;
étape d) introduction d'une solution de polymères anioniques dans le milieu réactionnel contenant les capsules obtenues à l'étape c) ;
étape e) introduction du mélange issu de l'étape d) dans un moyen pour former des gouttes ;
étape f) mélange des gouttes issues de l'étape e) avec une solution de sels divalents et formation des capsules à double parois ;
**caractérisé en ce qu'**aucun agent réticulant n'est utilisé et que le principe actif nutritionnel est choisi parmi les lipides bioactifs, les sels d'oligo-éléments, les vitamines liposolubles, les pré-biotiques, les pro-biotiques, les protéines et/ou les concentrats de protéines laitières, les enzymes végétales ou animales, les acides aminés et peptides, les sucres, les exhausteurs de goût.

2. Procédé selon la revendication 1, **caractérisé en ce que** le polymère anionique est choisi parmi les polymères naturels comme la gomme arabique, les alginates, les carraghénates, les dérivés de la cellulose comme la carboxyméthyle cellulose, les dérivés d'amidon comme le carboxyméthyle amidon, ou les polymères synthétiques comme les polymères acryliques, méthacryliques, polylactiques, polyglycoliques ou leurs combinaisons.

3. Procédé selon l'une des revendications 1 à 2, **caractérisé en ce que** le polymère cationique est choisi parmi les protéines animales comme la gélatine de porc ou de poisson, l'albumine, les protéines végétales issues par exemple du soja, de la pomme de terre ou du blé, le chitosan et ses dérivés, les polymères synthétiques issus de la combinaison d'amino acides comme la polylysine ou encore les polymères d'origine végétale comme la gomme guar et ses dérivés.

4. Procédé selon l'une des revendications 1 à 3, **caractérisé en ce que** la solution de polymères anioniques de l'étape d) est une solution d'alginate de sodium.

5. Procédé selon l'une des revendications 1 à 4, **caractérisé en ce que** ledit moyen pour former les gouttes mis en oeuvre à l'étape e) est une buse ou une aiguille.

6. Procédé selon l'une des revendications 1 à 5, **caractérisé en ce que** la solution de sels divalents de l'étape f) est choisie parmi les solutions de chlorure de calcium, de chlorure de baryum, de chlorure de manganèse.

7. Procédé selon l'une des revendications 1 à 6, **caractérisé en ce que** la solution de polymères anioniques de l'étape d) contient un principe actif à encapsuler, hydrophile.

8. Procédé selon la revendication 7, **caractérisé en ce que** la solution de polymères anioniques de l'étape d) contient au moins un additif choisi parmi des solides insolubles finement divisés de nature minérale, comme par exemple des silices, des laponites, des alumino-silicates, du dioxyde de titane, du sulfate de calcium ou de nature organique comme des cires micronisées telles que la cire de carnauba ou la cire d'abeille, des polymères cationiques comme le chitosan ou la polylysine, de l'acide stéarique ou ses dérivés micronisés, de la cellulose microcristalline, des amidons.

9. Procédé selon l'une des revendications 1 à 8 comprenant l'étape g) de filtration des capsules obtenues à l'étape f).

10. Procédé selon la revendication 9, comprenant une étape h) de lavage à l'eau ; et une étape de séchage.

11. Capsule à double parois comprenant un coeur lipophile entouré d'une première couche de coacervat polymérique et d'une seconde couche comprenant un hydrogel **caractérisée en ce qu'**elle ne contient aucune trace d'agent réticulant.

12. Capsule selon la revendication précédente **caractérisée en ce que** le coeur lipophile comprend un principe actif nutritionnel choisi parmi les lipides bioactifs, les sels d'oligo-éléments, les vitamines liposolubles, les pré-biotiques, les pro-biotiques, les protéines et/ou les concentrats de protéines laitières, les enzymes végétales ou animales, les acides aminés et peptides, les sucres, les exhausteurs de goût.

13. Capsule selon la revendication 11 ou 12 **caractérisée en ce que** l'hydrogel comprend un principe actif hydrophile nutritionnel.

14. Capsule selon l'une des revendications 11 à 13 ayant un diamètre compris entre 100 µm et 3000 µm et de préférence entre 500 µm et 2000 µm.

15. Capsule selon l'une des revendications 11 à 14 susceptible d'être obtenue par le procédé tel que défini à l'une des revendications 1 à 10.

16. Capsule selon l'une des revendications 11 à 15 **caractérisée en ce qu'**elle comprend de 0,5% à 40 % en poids d'actif lipophile, plus particulièrement de 1% à 30%, et encore plus particulièrement de 1% à 20%, de 0% à 20% en poids d'actif hydrophile, plus particulièrement de 0,5% à 10% et encore plus particulièrement de 0,5% à 5%, de 0,1% à 5% en poids de polymère anionique, plus particulièrement de 0,5 % à 5%, et encore plus particulièrement de 1% à 3%.

17. Utilisation d'au moins une capsule telle que définie à l'une des revendications 11 à 16 pour la préparation d'une composition agroalimentaire.

18. Composition agroalimentaire comprenant de 0,01% à 20% massique, plus particulièrement de 1% à 10% massique d'au moins une capsule telle que définie à l'une des revendications 11 à 16.

## Patentansprüche

1. Verfahren zur Herstellung von doppelwandigen Kapseln, die folgenden Schritte umfassend:
Schritt a) Dispergieren eines lipophilen Wirkstoffs in einer wässrigen Lösung, wobei die Lösung mindestens ein anionisches Polymer und mindestens ein kationisches Polymer enthält;
Schritt b) Einstellung des pH-Wertes der in Schritt a) gewonnenen Lösung, so dass die positiven Ladungen des kationischen Polymers die negativen Ladungen des anionischen Polymers ausgleichen, um eine Koazervierung zu induzieren;
Schritt c) Adsorption der Koazervattröpfchen aus Schritt b) an die Oberfläche des Wirkstoffs, um Kapseln zu bilden;
Schritt d) Einbringen einer Lösung von anionischen Polymeren in das Reaktionsmedium, das die in Schritt c) gewonnenen Kapseln enthält;
Schritt e) Einbringen des Gemisches aus Schritt d) in ein Tropfenbildungsmittel;
Schritt f) Vermischen der Tropfen aus Schritt e) mit einer Lösung von zweiwertigen Salzen und Bilden von doppelwandigen Kapseln;
**dadurch gekennzeichnet, dass** kein Vernetzungsmittel verwendet wird, und dass der Ernährungswirkstoff ausgewählt ist aus bioaktiven Lipiden, Spurenelementsalzen, fettlöslichen Vitaminen, Präbiotika, Probiotika, Protein- und/oder Milchproteinkonzentraten, pflanzlichen oder tierischen Enzymen, Aminosäuren und Peptiden, Zuckern, Geschmacksverstärkern.

2. Verfahren nach Anspruch 1, **dadurch gekennzeichnet, dass** das anionische Polymer ausgewählt ist aus natürlichen Polymeren wie Gummiarabikum, Alginaten, Carrageenaten, Cellulosederivaten wie Carboxymethylcellulose, Stärkederivaten wie Carboxymethylstärke oder synthetischen Polymeren wie Acryl-, Methacryl-, Polylaktikum-, Polyglykolpolymeren oder Kombinationen davon.

3. Verfahren nach einem der Ansprüche 1 bis 2, **dadurch gekennzeichnet, dass** das kationische Polymer ausgewählt ist aus tierischen Proteinen wie Schweine- oder Fischgelatine, Albumin, pflanzlichen Proteinen, zum Beispiel aus Soja, Kartoffel oder Weizen, Chitosan und seinen Derivaten, synthetischen Polymeren aus der Kombination von Aminosäuren wie Polylysin oder auch Polymeren pflanzlichen Ursprungs wie Guargummi und seinen Derivaten.

4. Verfahren nach einem der Ansprüche 1 bis 3, **dadurch gekennzeichnet, dass** die Lösung der anionischen Polymere aus Schritt d) eine Natriumalginatlösung ist.

5. Verfahren nach einem der Ansprüche 1 bis 4, **dadurch gekennzeichnet, dass** das Mittel zur Bildung der in Schritt e) verwendeten Tropfen eine Düse oder eine Nadel ist.

6. Verfahren nach einem der Ansprüche 1 bis 5, **dadurch gekennzeichnet, dass** die Lösung der zweiwertigen Salze aus Schritt f) ausgewählt ist aus Calciumchlorid-, Bariumchlorid-, Manganchloridlösungen.

7. Verfahren nach einem der Ansprüche 1 bis 6, **dadurch gekennzeichnet, dass** die Lösung der anionischen Polymere aus Schritt d) einen hydrophilen, verkapselnden Wirkstoff enthält.

8. Verfahren nach Anspruch 7, **dadurch gekennzeichnet, dass** die Lösung anionischer Polymere aus Schritt d) mindestens ein Additiv enthält, ausgewählt aus feinteiligen, unlöslichen Feststoffen mineralischer Natur, wie zum Beispiel Kieselsäure, Laponite, Aluminosilikate, Titandioxid, Calciumsulfat oder organischer Natur wie mikronisierte Wachse wie zum Beispiel Carnaubawachs oder Bienenwachs, kationische Polymere wie Chitosan oder Polylysin, Stearinsäure oder deren mikronisierte Derivate, mikrokristalline Cellulose, Stärke.

9. Verfahren nach einem der Ansprüche 1 bis 8, umfassend den Schritt g) der Filtration der in Schritt f) gewonnenen Kapseln.

10. Verfahren nach Anspruch 9, umfassend einen Schritt h) des Waschens mit Wasser; und einen Trocknungsschritt.

11. Doppelwandige Kapsel, umfassend einen lipophilen Kern, der von einer ersten Schicht aus polymerem Coacervat umgeben ist, und eine zweite Schicht, die ein Hydrogel umfasst, **dadurch gekennzeichnet, dass** sie keine Spuren eines Vernetzungsmittels enthält.

12. Kapsel nach dem vorstehenden Anspruch, **dadurch gekennzeichnet, dass** der lipophile Kern einen Ernährungswirkstoff umfasst, ausgewählt aus bioaktiven Lipiden, Spurenelementsalzen, fettlöslichen Vitaminen, Präbiotika, Probiotika, Protein- und/oder Milchproteinkonzentraten, pflanzlichen oder tierischen Enzymen, Aminosäuren und Peptiden, Zuckern, Geschmacksverstärkern.

13. Kapsel nach Anspruch 11 oder 12, **dadurch gekennzeichnet, dass** das Hydrogel einen ernährungsbezüglichen hydrophilen Wirkstoff umfasst.

14. Kapsel nach einem der Ansprüche 11 bis 13, die einen Durchmesser zwischen 100 µm und 3000 µm und vorzugsweise zwischen 500 µm und 2000 µm aufweist.

15. Kapsel nach einem der Ansprüche 11 bis 14, die durch das Verfahren, wie es in einem der Ansprüche 1 bis 10 definiert ist, gewonnen werden kann.

16. Kapsel nach einem der Ansprüche 11 bis 15, **dadurch gekennzeichnet, dass** sie von 0,5 bis 40 Gew.-% lipophilen Wirkstoff, insbesondere von 1 bis 30 Gew.-% und noch spezieller von 1 bis 20 Gew.-%, von 0 bis 20 Gew.-% hydrophilen Wirkstoff, insbesondere von 0,5 bis 10 Gew.-% und noch spezieller von 0,5 % bis 5 Gew.-%, von 0,1 bis 5 Gew.-% anionisches Polymer, insbesondere von 0,5 bis 5 Gew.-% und noch spezieller von 1 bis 3 Gew.-% umfasst.

17. Verwendung mindestens einer Kapsel, wie sie in einem der Ansprüche 11 bis 16 definiert ist, zur Herstellung einer Nahrungsmittelzusammensetzung.

18. Nahrungsmittelzusammensetzung, umfassend von 0,01 bis 20 Masse-%, insbesondere von 1 bis 10 Masse-% mindestens einer Kapsel, wie sie in einem der Ansprüche 11 bis 16 definiert ist.

## Claims

1. Method for preparing double-walled capsules comprising the following steps:
step a) dispersing a lipophilic active principle in an aqueous solution, said solution containing at least one anionic polymer and at least one cationic polymer;
step b) adjusting the pH of the solution obtained in step a) so that the positive charges of the cationic polymer balance the negative charges of the anionic polymer in order to induce coacervation;
step c) adsorbing the coacervate droplets resulting from step b) on the surface of the active principle in order to form capsules;
step d) introducing a solution of anionic polymers into the reaction medium containing the capsules obtained in step c);
step e) introducing the mixture resulting from step d) into a means for forming drops;
step f) mixing the drops resulting from step e) with a solution of divalent salts and forming the double-walled capsules;
**characterised in that** no cross-linking agents are used and **in that** the nutritional active principle is selected from among bioactive lipids, salts of trace elements, liposoluble vitamins, prebiotics, probiotics, proteins and/or concentrates of milk proteins, vegetable or animal enzymes, peptides and amino acids, sugars, flavour enhancers.

2. Method according to claim 1, **characterised in that** the anionic polymer is selected from among natural polymers such as gum arabic, alginates, carrageenates, cellulose derivatives such as carboxymethyl cellulose, starch derivatives such as carboxymethyl starch, or synthetic polymers such as acrylic, methacrylic, polylactic, polyglycolic polymers or combinations thereof.

3. Method according to one of claims 1 to 2, **characterised in that** the cationic polymer is selected from among animal proteins such as pig or fish gelatine, albumin, plant proteins coming for example from soy, potato or wheat, chitosan and the derivatives thereof, synthetic polymers coming from the combination of amino acids such as polylysine or polymers of plant origin such as guar gum and the derivatives thereof.

4. Method according to one of claims 1 to 3, **characterised in that** the solution of anionic polymers of step d) is a solution of sodium alginate.

5. Method according to one of claims 1 to 4, **characterised in that** said means for forming drops implemented in step e) is a nozzle or a needle.

6. Method according to one of claims 1 to 5, **characterised in that** the solution of divalent salts of the step f) is selected from among solutions of calcium chloride, barium chloride, manganese chloride.

7. Method according to one of claims 1 to 6, **characterised in that** the solution of anionic polymers of the step d) contains an active principle to be encapsulated, hydrophilic.

8. Method according to claim 7, **characterised in that** the solution of anionic polymers of the step d) contains at least one additive selected from among finely divided insoluble solids of a mineral nature, such as for example silicas, laponites, alumino-silicates, titanium dioxide, calcium sulphate or of organic nature such as micronised waxes such as carnauba wax or beeswax, cationic polymers such as chitosan or polylysine, stearic acid of the derivatives thereof, microcrystalline cellulose, starches.

9. Method according to one of claims 1 to 8 comprising the step g) for the filtration of the capsules obtained in the step f).

10. Method according to claim 9, comprising a step h) of washing with water; and a step of drying.

11. Double-walled capsule comprising a lipophilic core surrounded by a first layer of polymeric coacervate and of a second layer comprising a hydrogel **characterised in that** it contains no trace of cross-linking agents.

12. Capsule as claimed in the preceding claim **characterised in that** the lipophilic core comprises a nutritional active principle selected from among bioactive lipids, salts of trace elements, liposoluble vitamins, prebiotics, probiotics, proteins and/or concentrates of milk proteins, vegetable or animal enzymes, peptides and amino acids, sugars, flavour enhancers.

13. Capsule according to claim 11 or 12 **characterised in that** the hydrogel comprises a nutritional hydrophilic active principle.

14. Capsule according to one of claims 11 to 13 having a diameter between 100 µm and 3000 µm and preferably between 500 µm and 2000 µm.

15. Capsule according to one of claims 11 to 14 able to be obtained by the method such as defined in one of claims 1 to 10.

16. Capsule according to one of claims 11 to 15 **characterised in that** it comprises from 0.5% to 40% by weight of lipophilic active principle, more particularly from 1% to 30%, and even more particularly from 1% to 20%, from 0% to 20% by weight of hydrophilic active principle, more particularly from 0.5% to 10% and even more particularly from 0.5% to 5%, from 0.1% to 5% by weight of anionic polymer, more particularly from 0.5% to 5%, and even more particularly from 1% to 3%.

17. Use of at least one capsule such as defined in one of claims 11 to 16 for the preparation of an agrifood composition.

18. Agrifood composition comprising from 0.01% to 20% by weight, more particularly from 1% to 10% by weight of at least one capsule such as defined in one of claims 11 to 16.
